# EUROPEAN PATENT APPLICATION

(11) **EP 4 344 072 A1**
(43) Date of publication of application: **27.03.2024**
(21) Application number: 22810243.0
(22) Date of filing: 14.04.2022
(51) Int. Cl.: H04B 1/40

(54) **RADIO FREQUENCY SYSTEM, ANTENNA SWITCHING METHOD, AND COMMUNICATION DEVICE**

(30) Priority: 24.05.2021 CN 202110563963
(71) Applicant: GUANGDONG OPPO MOBILE TELECOMMUNICATIONS CORP., LTD., Dongguan, Guangdong 523860 (CN)
(72) Inventor: CHEN, Feng, Dongguan, Guangdong 523860 (CN); TONG, Lin, Dongguan, Guangdong 523860 (CN)
(74) Representative: Novagraaf Technologies
(86) International application number: PCT/CN2022/086796
(87) International publication number: WO 2022/247510

(57) **Abstract**

A radio-frequency system, comprising a radio-frequency transceiver (10); and a radio-frequency transceiving circuit (20) connected to the radio-frequency transceiver (10), the radio-frequency transceiving circuit (20) comprising a first transceiving path (TRX0), a second transceiving path (TRX1), a first receiving path (RX2), and a second receiving path (RX3), the first transceiving path (TRXO) and the first receiving path (RX2) being configured to be connected to a first antenna (ANT0) and a third antenna (ANT2) in a switchable mode, the second transceiving path (TRX1) and the second receiving path (RX3) being configured to be connected to a second antenna (ANT1) and a fourth antenna (ANT3) in a switchable mode, and the first transceiving path (TRXO) being independent from the second transceiving path (TRX1). The radio-frequency transceiver (10) is used for configuring a target transceiving path according to radio-frequency signals received by the first transceiving path (TRXO) and the second transceiving path (TRX1), and configuring the target transceiving path to be used for receiving and transmitting a target radio-frequency signal, the target transceiving path being one of the first transceiving path (TRXO) and the second transceiving path (TRX1).

## Description

### CROSS REFERENCE TO RELATED APPLICATIONS

The present disclosure claims priority to Chinese Patent Application 202110563963.2, entitled "RADIO-FREQUENCY SYSTEM, ANTENNA SWITCHING METHOD, AND COMMUNICATION DEVICE", filed May 24, 2021, the entire content of which is incorporated in the present disclosure by reference.

### TECHNICAL FIELD

The present disclosure relates to the technical field of antennas, in particular to a radio-frequency system, an antenna switching method, and a communication device.

### BACKGROUND

The statements herein only provide background information relevant to the present disclosure and do not necessarily constitute the exemplary related art.

With development and progress of technology, the mobile communication technology is gradually applied to communication devices, such as mobile phones. For the communication device supporting a 5G communication technology, a dual-connectivity mode of 4G signal and 5G signal is usually used in a Non-Standalone (NSA) mode. In order to improve communication performance of the dual-connectivity mode of 4G and 5G, a switching circuit is required to be arranged in a radio-frequency system of the communication device to achieve a necessary antenna switching. However, the antenna switching in a related radio-frequency system is realized by a form of hardware switches. On one hand, a large insertion loss may be caused to the radio-frequency system; on the other hand, hardware decoupling of a radio-frequency channel is hard to be realized. In this way, the communication performance of the radio-frequency system in various communication formats may be affected.

### SUMMARY

According to the embodiments of the present disclosure, a radio-frequency system, an antenna switching method, and a communication device are provided.

Some embodiments of the present disclosure provide a radio-frequency system. The radio-frequency system includes a radio-frequency transceiver and a radio-frequency transceiving circuit. The radio-frequency transceiving circuit is connected to the radio-frequency transceiver. The radio-frequency transceiving circuit includes a first transceiving channel, a second transceiving channel, a first receiving channel, and a second receiving channel. The first transceiving channel is configured to be selectively connected to one of a first antenna and a third antenna, and the first receiving channel is configured to be selectively connected to the other of the first antenna and the third antenna. The second transceiving channel is configured to be selectively connected to one of a second antenna and a fourth antenna, and the second receiving channel is configured to be selectively connected to the other of the second antenna and the fourth antenna. The first transceiving channel and the second transceiving channel are independent from each other. The radio-frequency transceiver is configured to configure a target transceiving channel based on radio-frequency signals received by the first transceiving channel and the second transceiving channel and configure the target transceiving channel to receive and transmit a target radio-frequency signal. The target transceiving channel is one of the first transceiving channel and the second transceiving channel.

Some embodiments of the present disclosure provide an antenna switching method performed by a radio-frequency system. The antenna switching method includes: configuring, by a radio-frequency transceiver, a target transceiving channel based on radio-frequency signals received by a first transceiving channel and a second transceiving channel in a radio-frequency transceiving circuit; and configuring, by the radio-frequency transceiver, the target transceiving channel to receive and transmit a target radio-frequency signal. Herein, the target transceiving channel is one of the first transceiving channel and the second transceiving channel. The first transceiving channel and the second transceiving channel are independent from each other; the first transceiving channel is configured to be selectively connected to one of a first antenna and a third antenna, and the second transceiving channel is configured to be selectively connected to one of a second antenna and a fourth antenna.

Some embodiments of the present disclosure provide a communication device. The communication device includes the aforesaid radio-frequency system.

Some embodiments of the present disclosure provide a communication device. The communication device includes a radio-frequency transceiver, a radio-frequency transceiving circuit, a first switching unit, and a second switching unit. The radio-frequency transceiving circuit is connected to the radio-frequency transceiver. The radio-frequency transceiving circuit includes a first transceiving module, a second transceiving module, a first receiving module, and a second receiving module. The first switching unit is configured to selectively connect the first transceiving module to one of a first antenna and a third antenna, and selectively connect the first receiving module to the other of the first antenna and the third antenna. The second switching unit is configured to selectively connect the second transceiving module to one of a second antenna and a fourth antenna, and selectively connect the second receiving module to the other of the second antenna and the fourth antenna. The radio-frequency transceiver is configured to configure one of the first transceiving module and the second transceiving module as a target transceiving module based on the radio-frequency signals received by the first transceiving module and the second transceiving module, and transmit and receive a target radio-frequency signal through the target transceiving module.

Details of one or more embodiments of the disclosure will be described in the following figures and description. Other features, objects, and advantages of the disclosure will become more apparent from the description, the figures, and the claims.

### BRIEF DESCRIPTION OF THE DRAWINGS

In order to more clearly describe the embodiments of the present disclosure or the technical solution of the related art, the following will briefly introduce the figures needed to be used in the description of the embodiments or the related art. Obviously, the figures in the following description are only some embodiments of the present disclosure. For those skilled in the art, other figures may be obtained based on these figures without paying any creative work.
FIG. 1 is a block diagram of a radio-frequency system according to some embodiments of the present disclosure.
FIG. 2 is a block diagram of a radio-frequency system according to some embodiments of the present disclosure.
FIG. 3 is a schematic diagram of a distribution of four antennas in a communication device according to some embodiments of the present disclosure.
FIG. 4 is a block diagram of a radio-frequency system according to some embodiments of the present disclosure.
FIG. 5 is a block diagram of a radio-frequency system according to some embodiments of the present disclosure.
FIG. 6 is a block diagram of a radio-frequency system according to some embodiments of the present disclosure.
FIG. 7 is a block diagram of a radio-frequency system according to some embodiments of the present disclosure.
FIG. 8 is a block diagram of a radio-frequency system according to some embodiments of the present disclosure.
FIG. 9 is a block diagram of a radio-frequency system according to some embodiments of the present disclosure.
FIG. 10 is a block diagram of a radio-frequency system according to some embodiments of the present disclosure.
FIG. 11 is a block diagram of a radio-frequency system according to some embodiments of the present disclosure.
FIG. 12 is a block diagram of a radio-frequency system according to some embodiments of the present disclosure.
FIG. 13 is a schematic diagram of a distribution of a first switching unit and a second switching unit in a communication device according to some embodiments of the present disclosure.
FIG. 14 is a flow chart of an antenna switching method according to some embodiments of the present disclosure.
FIG. 15 is a schematic structural diagram of a communication device according to some embodiments of the present disclosure.

### DETAILED DESCRIPTIONS

In order to enable the purpose, technical solution, and advantage of the present disclosure to be clear, the present disclosure is further described in detail below in combination with the figures and embodiments. It should be understood that, the specific embodiments described herein are only configured to explain the present disclosure and not to limit the present disclosure.

It may be understood that, the terms "first", "second", and the like, used in some embodiments of the present disclosure may be used herein to describe various elements, but these elements are not limited by these terms. These terms are only configured to distinguish the first element from another element. For example, without departing from the scope of the present disclosure, a first antenna may be referred to as a "second antenna", and similarly, a second antenna may be referred to as a "first antenna". Both the first antenna and the second antenna are antennas, and they are not the same antenna.

In addition, the term "first" or "second" is only for descriptive purposes, and it cannot be understood as indicating or implying relative importance or implicitly indicating the number of indicated technical features. Therefore, the features defined with "first" or "second" may explicitly or implicitly include at least one of the features. In the description of the present disclosure, "a plurality of" means at least two, such as two, three, and so on, unless otherwise specifically indicated. In the present disclosure, "several" means at least one, such as one, two, and so on, unless otherwise specifically indicated.

The radio-frequency system involved in some embodiments of the present disclosure may be applied to a communication device with a wireless communication function. The communication device may be a handheld device, a vehicle-mounted device, a wearable device, a computing device or other processing devices connected to a wireless modem, various forms of User Equipments (UE) (e.g., mobile phones), Mobile Stations (MS), etc. For convenience of description, the aforementioned devices are collectively referred to as the communication device.

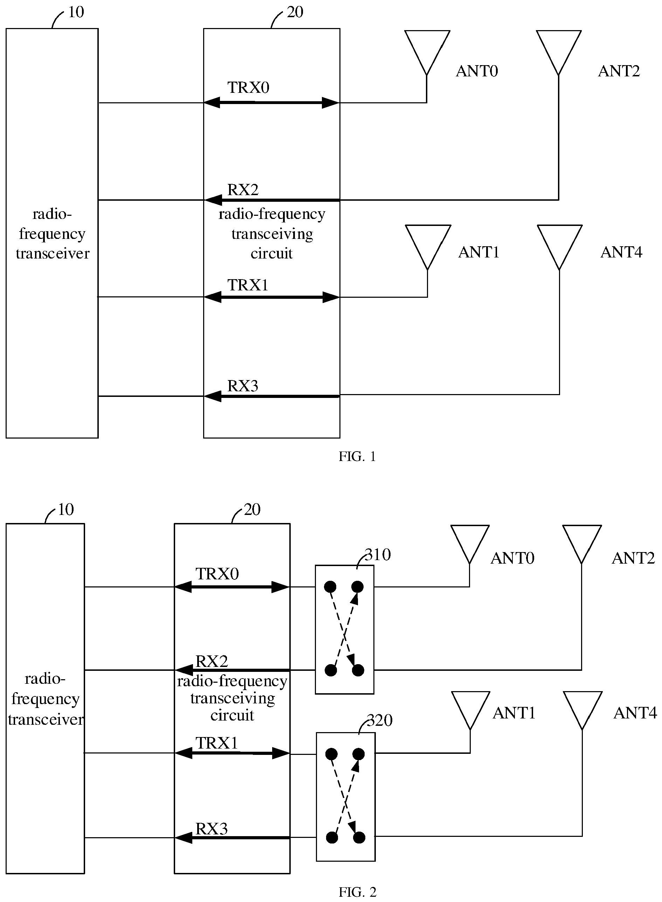

As shown in FIG. 1, some embodiments of the present disclosure provide a radio-frequency system. The radio-frequency system provided by some embodiments of the present disclosure may work in a Non-Standalone (NSA) working mode, a Standalone (SA) working mode (which may also be referred to as a NR SA working mode), and a long-term evolution (LTE) working mode (which may also be referred to as a LTE only working mode).

The NSA working mode includes any one of an EN-DC (E-UTRA and New radio Dual Connectivity) architecture, a NE-DC (New Radio and E-UTRA Dual Connectivity) architecture, and a NGEN-DC (Next Generation RAN E-UTRA New Radio-Dual Connectivity) architecture. In some embodiments of the present disclosure, as an example, the NSA working mode may be based on the EN-DC architecture. Herein, E is Evolved-Universal Mobile Telecommunications System Terrestrial Radio Access (E-UTRA) and represents a 4G wireless access of a mobile terminal. N is New Radio (NR) and represents a 5G wireless connection of a mobile terminal. DC is Dual Connectivity and represents a dual connectivity of 4G and 5G. In the EN-DC mode, based on a 4G core network, the radio-frequency system may realize a dual connectivity with a 4G base station and a 5G base station at the same time. According to specification requirements of 5G in 3GPP Release-5, EN-DC combinations are mainly shown in Table 1. However, the EN-DC combinations are not limited to the combination forms shown in Table 1.

**Table 1 EN-DC Combinations**

| 5G frequency bands | EN-DC combinations |
|---|---|
| N5 | B12+N5/B1+N5 |
| N8 | B12+N8/B1+N8 |
| N20 | B12+N20/B1+N20 |
| N28A | B12+N28A/B1+N28A |
| N28B | B12+N28B/B1+N28B |
| N1 | B3+N1 |
| N41 | B3+N41B39+N41 |
| N78 | B3+N78/B5+N78 |
| N79 | B3+N79 |

It should be noted that, the EN-DC combinations supported by the radio-frequency system provided by some embodiments of the present disclosure are not limited to the combination forms shown in Table 1.

The radio-frequency system may also be in the SA working mode or the LTE working mode. When being in the SA working mode, the radio-frequency system may only realize a single connectivity with the 5G base station. That is, the radio-frequency system may be configured or enabled to transmit and receive a 5G NR signal. When being in the LTE working mode, the radio-frequency system may only realize a single connectivity with the 4G base station. That is, the radio-frequency system is configured or enabled to transmit and receive a 4G LTE signal.

As shown in FIG. 1, in some embodiments, the radio-frequency system provided by some embodiments of the present disclosure includes a radio-frequency transceiver 10, a radio-frequency transceiving circuit 20, a first antenna ANT0, a second antenna ANT1, a third antenna ANT2, and a fourth antenna ANT3. The first antenna ANT0, the second antenna ANT1, the third antenna ANT2, and the fourth antenna ANT3 may correspondingly support transmission and reception of LTE radio-frequency signals in a plurality of frequency bands in low frequency, medium frequency, and high frequency and NR radio-frequency signals in a plurality of frequency bands in low frequency, medium frequency, and high frequency. Each antenna may be formed by using any suitable type of antenna structures. For example, each antenna may include an antenna, with a resonant element, formed by any one of the following antenna structures: an array antenna structure, a ring antenna structure, a patch antenna structure, a gap antenna structure, a spiral antenna structure, a strip antenna, a monopole antenna, a dipole antenna, and so on. Different types of antennas may be used for different frequency bands and different combinations of frequency bands. In some embodiments of the present disclosure, the types of the first antenna ANT0, the second antenna ANT1, the third antenna ANT2, and the fourth antenna ANT3 are not further limited.

The radio-frequency transceiver 10 may be configured with a plurality of ports connected to the radio-frequency transceiving circuit 20. In some embodiments, the radio-frequency transceiving circuit 20 includes a first transceiving channel TRX0, a second transceiving channel TRX1, a first receiving channel RX2, and a second receiving channel RX3. The first antenna ANT0 and the third antenna ANT2 are connected to some of the ports of the radio-frequency transceiver 10 through the radio-frequency transceiving circuit 20, respectively. In some embodiments, the first transceiving channel TRXO is configured to be selectively or switchably connected to one of the first antenna ANT0 and the third antenna ANT2, and the first receiving channel RX2 is configured to be selectively or switchably connected to the other of the first antenna ANT0 and the third antenna ANT2. The second antenna ANT1 and the fourth antenna ANT3 are connected to some of the ports of the radio-frequency transceiver 10 through the radio-frequency transceiving circuit 20, respectively. In some embodiments, the second transceiving channel TRX1 is configured to be selectively or switchably connected to one of the second antenna ANT1 and the fourth antenna ANT3, and the second receiving channel RX3 is configured to be selectively or switchably connected to the other of the second antenna ANT1 and the fourth antenna ANT3.

The first transceiving channel TRXO and the second transceiving channel TRX1 are independent from each other. That is, the first transceiving channel TRXO and the second transceiving channel TRX1 are independent from each other in hardware. No connection or coupling in hardware exists between the first transceiving channel TRXO and the second transceiving channel TRX1. In some embodiments, the first transceiving channel TRXO may only be connected to the first antenna ANT0 and the third antenna ANT2, and cannot be connected to the second antenna ANT1 and the fourth antenna ANT4. Correspondingly, the second transceiving channel TRX1 may only be connected to the second antenna ANT1 and the fourth antenna ANT4, and cannot be connected to the first antenna ANT0 and the third antenna ANT2.

The radio-frequency transceiver 10 stores configuration information of the first transceiving channel TRX0, the second transceiving channel TRX1, the first receiving channel RX2, and the second receiving channel RX3. The configuration information may include identification information of an antenna, identification information of a port of the radio-frequency transceiver 10, control logic information of each switch on the first transceiving channel TRX0, the second transceiving channel TRX1, the first receiving channel RX2, and the second receiving channel RX3. The radio-frequency transceiver 10 may store in advance a default receiving channel, a default transmitting channel, etc., of the radio-frequency system in different working modes. In some embodiments of the present disclosure, the default receiving channel and the default transmitting channel may be understood as a preferred channel or an optimal channel for signal transfer of the radio-frequency system in an initial state. It may be understood that, the aforesaid configuration information may also be stored in a storage device independent from the radio-frequency transceiver 10 and may be read by the radio-frequency transceiver 10 when being needed. The aforesaid configuration information may also be stored in the radio-frequency transceiver 10. In some embodiments of the present disclosure, a storage position of the configuration information is not further limited.

The radio-frequency transceiver 10 is configured to configure a target transceiving channel based on radio-frequency signals received by the first transceiving channel TRXO and the second transceiving channel TRX1, and configure or enbale the target transceiving channel to transmit and receive a target radio-frequency signal. Herein, the target transceiving channel is one of the first transceiving channel TRXO and the second transceiving channel TRX1. The radio-frequency signals may include a first radio-frequency signal with a first communication format and a second radio-frequency signal with a second communication format. In some embodiments, the first radio-frequency signal may include 4G LTE signals in a plurality of frequency bands, and the second radio-frequency signal may include 5G NR signals in a plurality of frequency bands. It should be noted that, when the radio-frequency system is in different working modes, the communication formats of the radio-frequency signals that may be transmitted and received by the first transceiving channel TRXO and the second transceiving channel TRX1 are different from each other. For example, when the radio-frequency system is in the SA working mode, the radio-frequency signals may include 5G NR signals in a plurality of frequency bands, and the corresponding target radio-frequency signal is also a 5G NR signal. When the radio-frequency system is in the LTE working mode, the radio-frequency signals may include 4G LTE signals in a plurality of frequency bands, and the corresponding target radio-frequency signal is also a 4G LTE signal. When the radio-frequency system is in the NSA working mode, the radio-frequency signals may include 4G LTE signals in a plurality of frequency bands and 5G NR signals in a plurality of frequency bands.

When the radio-frequency system is in the SA working mode or the LTE working mode, the radio-frequency transceiver may configure the target transceiving channel based on a signal strength of the radio-frequency signal received by the first transceiving channel TRXO and a signal strength of the radio-frequency signal received by the second transceiving channel TRX1. For example, the transceiving channel with a great or high signal strength may be taken as the target transceiving channel, and the target transceiving channel is configured or enabled to receive and transmit the target radio-frequency signal. The signal strength may be obtained by detecting network information of the radio-frequency signal, which is not limited herein. The network information may include original information and processed information associated with wireless performance measurement of the received antenna signal, such as a receiving power, a transmitting power, a Reference Signal Receiving Power (RSRP), a Reference Signal Receiving Quality (RSRQ), a Received Signal Strength Indicator (RSSI), a Signal to Noise Ratio (SNR), a Rank of MIMO channel matrix, a Carrier to Interference plus Noise Ratio (RS-CINR), a frame error rate, a bit error rate, etc.

In some embodiments of the present disclosure, the radio-frequency system includes a radio-frequency transceiver 10 and a radio-frequency transceiving circuit 20. In the radio-frequency transceiving circuit 20, the first transceiving channel TRXO and the second transceiving channel TRX1 are independent from each other, so as to realize decoupling and facilitate a flexible layout. The first transceiving channel TRXO and the second transceiving channel TRX1 may be arranged at positions close to the corresponding antennas, respectively, so as to reduce link losses on the first transceiving channel TRXO and the second transceiving channel TRX1, and the communication performance of the radio-frequency system may be improved.

As shown in FIG. 2, in some embodiments, the radio-frequency system also includes a first switching unit 310 and a second switching unit 320 that are independent from each other. The first transceiving channel TRXO may be selectively or switchably connected to one of the first antenna ANT0 and the third antenna ANT2 through the first switching unit 310, and the first receiving channel RX2 may be selectively or switchably connected to the other of the first antenna ANT0 and the third antenna ANT2 through the first switching unit 310. The second transceiving channel TRX1 may be selectively or switchably connected to one of the second antenna ANT1 and the fourth antenna ANT3 through the second switching unit 320, and the second receiving channel RX3 may be selectively or switchably connected to the other of the second antenna ANT1 and the fourth antenna ANT3 through the second switching unit 320. That is, in some embodiments of the present disclosure, the first switching unit 310 and the second switching unit 320 are arranged to support standalone arrangements or independent arrangements of the first transceiving channel TRXO and the second transceiving channel TRX1. In this way, no connection or coupling in hardware exists between the first transceiving channel TRXO and the second transceiving channel TRX1. In some embodiments, both the first switching unit 310 and the second switching unit 320 may be Double-Pole-Double-Throw (DPDT) switches. For example, one of two first ends of the first switching unit 310 may be connected to the first transceiving channel TRX0, and the other of the two first ends of the first switching unit 310 may be connected to the first receiving channel RX2. One of two second ends of the first switching unit 310 may be connected to the first antenna ANT0, and the other of the two second ends of the first switching unit 310 may be connected to the third antenna ANT2. Correspondingly, one of two first ends of the second switching unit 320 may be connected to the second transceiving channel TRX1, and the other of the two first ends of the second switching unit 320 may be connected to the second receiving channel RX3. One of two second ends of the second switching unit 320 may be connected to the second antenna ANT1, and the other of the two second ends of the second switching unit 320 may be connected to the fourth antenna ANT4.

In some embodiments of the present disclosure, two DPDT switches independent or separated from each other are arranged to replace a switching unit for switching of the antennas used in the related art, for example, a Three-Pole-Three-Throw (3P3T) switch connected to three antennas respectively or a Four-Pole-Four-Throw (4P4T) switch connected to four antennas respectively, to realize decoupling of the first transceiving channel TRXO and the second transceiving channel TRX1. An insertion loss of the switching component may be reduced. For example, the insertion loss may be reduced by about 0.5 dB, to improve the communication performance of the radio-frequency system in different working modes, and the cost of switching component may be reduced.

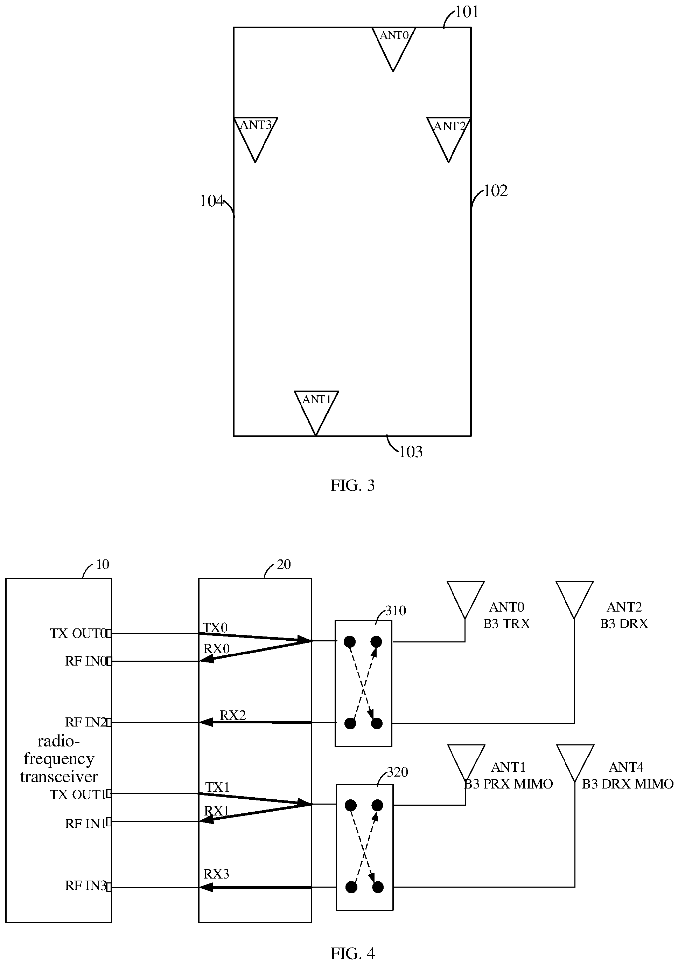

In some embodiments, as shown in FIG. 3, when the radio-frequency system is applied in the communication device, due to a limitation of a structure of the communication device, the first antenna ANT0 and the second antenna ANT1 are arranged on a top frame 101 and a bottom frame 103 of the communication device, respectively, and the third antenna ANT2 and the fourth antenna ANT3 are arranged on two side frames 102 and 104 of the communication device, respectively. Therefore, efficiency of the first antenna ANT0 and efficiency of the second antenna ANT1 are higher than efficiency of the third antenna ANT2 and efficiency of the fourth antenna ANT3.

When the radio-frequency system is in the NSA working mode, the first antenna ANT0 may be used for transmission of the first radio-frequency signal and primary reception of the first radio-frequency signal, and the third antenna ANT2 may be used for diversity reception of the first radio-frequency signal. The second antenna ANT1 may be used for transmission of the second radio-frequency signal and primary reception of the second radio-frequency signal, and the fourth antenna ANT3 may be used for diversity reception of the second radio-frequency signal. Herein, the first radio-frequency signal may be a 4G LTE signal, the second radio-frequency signal may be a 5G NR signal, and a combination of the first radio-frequency signal and the second radio-frequency signal may meet the EN-DC combinations. For the convenience of description, as shown in FIG. 4, in some embodiments of the present disclosure, the first radio-frequency signal is a 4G LTE signal in a B3 frequency band (which is also referred to as a B3 signal), and the second radio-frequency signal is a 5G NR signal in a N1 band (which is also referred to as a N1 signal). That is, the first antenna ANT0 may be used for transmission and primary reception of the B3 signal, and the third antenna ANT2 may be used for diversity reception of the B3 signal. The second antenna ANT1 may be used for transmission and primary reception of the N1 signal, and the fourth antenna ANT3 may be used for diversity reception of the N1 signal.

When the radio-frequency system works in the NSA working mode, the dual connectivity of the first radio-frequency signal and the second radio-frequency signal may be realized. Uplink signals may be configured on the first antenna ANT0 and the second antenna ANT1 with better antenna efficiency, and the reliability of the uplink signals may be ensured.

In some embodiments, when the radio-frequency system is in the NSA working mode, the first antenna ANT0 may also be used for primary MIMO (multiple-input multiple-output) reception of the second radio-frequency signal, the second antenna ANT0 may also be used for diversity MIMO reception of the second radio-frequency signal, the third antenna ANT2 may also be used for primary MIMO reception of the first radio-frequency signal, and the fourth antenna ANT3 may also be used for diversity MIMO reception of the first radio-frequency signal. In this way, the radio-frequency system may support a 4 * 4MIMO function for the first radio-frequency signal and the second radio-frequency signal.

When the radio-frequency system is in the LTE working mode, the radio-frequency system may transmit and receive a 4G LTE signal. The radio-frequency transceiver 10 may configure the target transceiving channel based on the 4G LTE signals received by the first transceiving channel TRXO and the second transceiving channel TRX1, and configure or enable the target transceiving channel to transmit and receive the 4G LTE signal.

When the radio-frequency system is in the SA working mode, the radio-frequency system may transmit and receive a 5G NR signal. The radio-frequency transceiver 10 may configure the target transceiving channel based on the 5G NR signals received by the first transceiving channel TRXO and the second transceiving channel TRX1, and configure or enable the target transceiving channel to transmit and receive the 5G NR signal.

In some embodiments of the present disclosure, the radio-frequency system may not only work in the NSA working mode to realize of the dual connectivity of the first radio-frequency signal and the second radio-frequency signal, but also configure the uplink signals on the first antenna ANT0 and the second antenna ANT1 with better antenna efficiency. In this way, the reliability of the uplink signals may be ensured. In addition, when the radio-frequency system works in the SA working mode or the LTE working mode, the target transmitting channel may be configured from the first transceiving channel TRXO and the second transceiving channel TRX1, so as to realize transmission and reception of the radio-frequency signals in different working modes (such as the 4G LTE signals or the 5G NR signals). The uplink signals may also be configured on the first antenna ANT0 or the second antenna ANT1 with better antenna efficiency. The reliability of the uplink signals may be ensured, and the communication performance of the radio-frequency system in the SA working mode or the LTE working mode may be improved.

As shown in FIG. 4, in some embodiments, the radio-frequency transceiver 10 is configured with a plurality of ports, for example, the plurality of ports may include a first output port TX OUTO, a second output port TX OUT1, a first input port RFIN0, a second input port RFIN1, a third input port RFIN2, and a fourth input port RFIN3. The first transceiving channel TRXO includes a first sub-receiving channel RX0 and a first transmitting channel TX0. The second transceiving channel TRX1 includes a second sub-receiving channel RX1 and a second transmitting channel TX1. Each input port is configured or enabled to receive the radio-frequency signal input from the antenna side, and each output port is configured to output the radio-frequency signal processed by the radio-frequency transceiver 10 to the antenna side. Herein, the first output port TX OUTO is correspondingly connected to the first transmitting channel TX0, the second output port TX OUT1 is correspondingly connected to the second transmitting channel TX1, the first input port RFIN0 is correspondingly connected to the first sub-receiving channel RX0, and the second input port RFIN1 is correspondingly connected to the second sub-receiving channel RX1.

In some embodiments, the radio-frequency transceiver 10 is configured to configure the first transmitting channel TX0 and the first sub-receiving channel RX0 to be connected to the first antenna ANT0, and configure the second transmitting channel TX1 and the second sub-receiving channel RX1 to be connected to the second antenna ANT1. The radio-frequency transceiver 10 is configured to configure the target transmitting channel based on the radio-frequency signals received by the first sub-receiving channel RX0 and the second sub-receiving channel RX1. The target transmitting channel is one of the first transmitting channel TX0 and the second transmitting channel TX1.

In some embodiments, when the radio-frequency system is in the LTE working mode, the radio-frequency transceiver 10 may configure the first transmitting channel TX0 as the default transmitting channel of the first radio-frequency signal. That is, the first antenna ANT0 is used for the transmission and primary reception of the first radio-frequency signal. The second antenna ANT1 is used for the diversity reception of the first radio-frequency signal. The third antenna ANT2 is used for the primary MIMO reception of the first radio-frequency signal. The fourth antenna ANT3 is used for the diversity MIMO reception of the first radio-frequency signal. The radio-frequency transceiver 10 is configured to configure the target transceiving channel based on the first radio-frequency signals received by the first sub-receiving channel RX0 and the second sub-receiving channel RX1. In some embodiments, the radio-frequency transceiver 10 may determine and configure the target transceiving channel based on the first radio-frequency signals (such as the B3 signals) received by the first sub-receiving channel RX0 and the second sub-receiving channel RX1.

If a first difference value between signal quality of the first radio-frequency signal received by the second sub-receiving channel RX1 and signal quality of the first radio-frequency signal received by the first sub-receiving channel RX0 is greater than a first preset threshold, for example, the first difference value obtained by subtracting the signal quality of the first radio-frequency signal received by the first sub-receiving channel RX0 from the signal quality of the first radio-frequency signal received by the second sub-receiving channel RX1 is greater than the first preset threshold, it may be determined that the first antenna ANT0 is blocked, for example, held by a user. Herein, the first difference value may be obtained by subtracting second signal quality corresponding to the first sub-receiving channel RX0 from first signal quality corresponding to the second sub-receiving channel RX1. At this time, the efficiency of the second antenna ANT1 is higher than that of the first antenna ANT0. To ensure communication quality of the first radio-frequency signal, the radio-frequency transceiver 10 may configure the second transmitting channel TX1 as the target transmitting channel for transmitting the first radio-frequency signal. In this way, the primary reception of the first radio-frequency signal may be switched to the second antenna ANT1. The second antenna ANT1 with higher efficiency may be used for the transmission and primary reception of the first radio-frequency signal, so as to improve the communication quality of the first radio-frequency signal.

In some embodiments, when the radio-frequency system is in the SA working mode, the radio-frequency transceiver 10 may configure the second transmitting channel TX1 as the default transceiving channel of the second radio-frequency signal. Correspondingly, the second antenna ANT1 is used for the transmission and primary reception of the second radio-frequency signal. The first antenna ANT0 is used for the diversity reception of the second radio-frequency signal. The third antenna ANT2 is used for the diversity MIMO reception of the second radio-frequency signal. The fourth antenna ANT3 is used for the primary MIMO reception of the second radio-frequency signal. The radio-frequency transceiver 10 is configured to configure the target transceiving channel based on the second radio-frequency signals received by the first sub-receiving channel RX0 and the second sub-receiving channel RX1. For example, the radio-frequency transceiver 10 may determine and configure the target transceiving channel based on the second radio-frequency signals (such as the N1 signals) received by the first sub-receiving channel RX0 and the second sub-receiving channel RX1.

If a second difference value between signal quality of the second radio-frequency signal received by the second sub-receiving channel RX1 and signal quality of the second radio-frequency signal received by the first sub-receiving channel RX0 is greater than a second preset threshold, it may be determined that the first antenna ANT0 is blocked, for example, held by the user. Herein, the second difference value may be obtained by subtracting first signal quality corresponding to the first sub-receiving channel RX0 from second signal quality corresponding to the second sub-receiving channel RX1. At this time, the efficiency of the second antenna ANT1 is higher than that of the first antenna ANT0. The radio-frequency transceiver 10 may configure the first transmitting channel TX0 as the target transmitting channel for transmitting the second radio-frequency signal.

In some embodiments of the present disclosure, the first threshold and the second threshold are both greater than zero and may be set according to requirements.

In some embodiments of the present disclosure, by setting judgment conditions of the first threshold and the second threshold, frequent switching between antennas, which is caused by constantly changes of a signal strength of the antenna, may be avoided. In this way, the impact on the transmission efficiency of the antenna may be reduced.

In some embodiments, the radio-frequency transceiver 10 may also be configured to configure a target receiving channel based on at least one of the target transmitting channel, the radio-frequency signal received by the first sub-receiving channel RX0, and the radio-frequency signal received by the second sub-receiving channel RX1. The target receiving channel and the target transmitting channel are connected to the same antenna or different antennas.

In some embodiments, if the radio-frequency signal to be transmitted and received is in a FDD format, the target receiving channel and the target transmitting channel are connected to the same antenna. For example, if the target transmitting channel is switched from the first transmitting channel TX0 to the second transmitting channel TX1, that is, after a target antenna is switched from the first antenna ANT0 to the second antenna ANT1, the corresponding target receiving channel may also be switched from the first sub-receiving channel RX0 to the second sub-receiving channel RX1. The second antenna ANT1 serves as a transmitting antenna and a primary receiving antenna for the radio-frequency signal, and the first antenna ANT0 serves as a diversity receiving antenna for the radio-frequency signal.

If the radio-frequency signal to be transmitted and received is in a TDD format, the target receiving channel and target transmitting channel may be connected to different antennas. That is, even if the target transmitting channel switches from the first transmitting channel TX0 to the second transmitting channel TX1, the target receiving channel may remain unchanged, and the target receiving channel may still be connected to the first antenna ANT0.

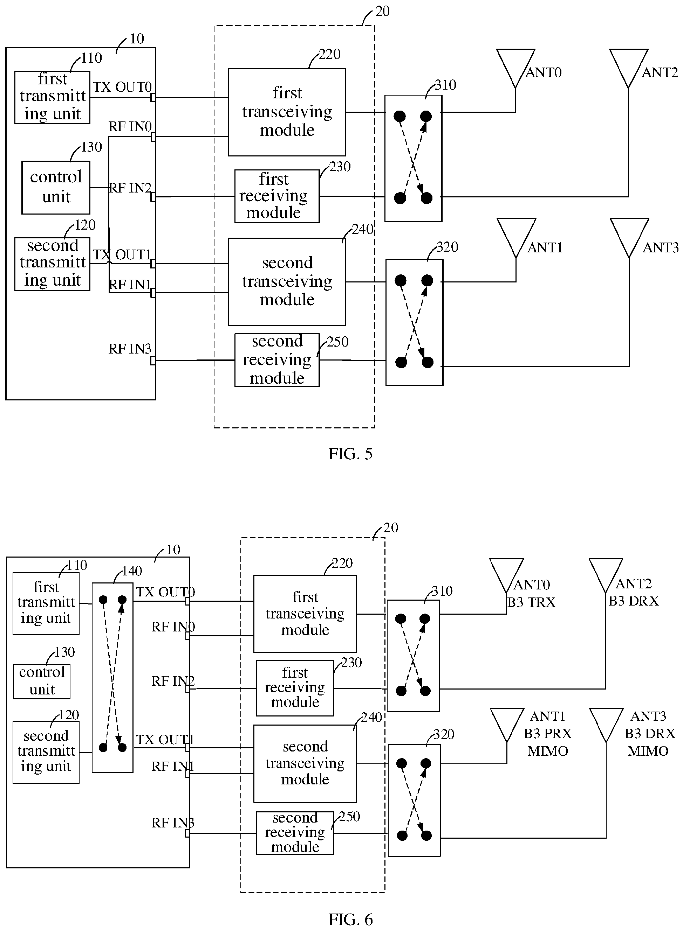

As shown in FIG. 5, in some embodiments, the radio-frequency transceiving circuit 20 includes a first transceiving module 220, a first receiving module 230, a second transceiving module 240, and a second receiving module 250. Each of the first transceiving module 220 and the second transceiving module 240 may support receiving processing and transmitting processing for the first radio-frequency signal and receiving processing and transmitting processing for the second radio-frequency signal. Each of the first receiving module 230 and the second receiving module 250 may support receiving processing for the first radio-frequency signal and receiving processing for the second radio-frequency signal. The first transceiving module 220 may be configured to form the first transceiving channel in the radio-frequency transceiving circuit 20. The second transceiving module 240 may be configured to form the second transceiving channel in the radio-frequency transceiving circuit 20. The first receiving module 230 may be configured to form the first receiving channel in the radio-frequency transceiving circuit 20. The second receiving module 250 may be configured to form the second receiving channel in the radio-frequency transceiving circuit 20. That is, the first transceiving module 220 may be selectively or switchably connected to one of the first antenna ANT0 and the third antenna ANT2 through the first switching unit 310, and the first receiving module 230 may be selectively or switchably connected to the other of the first antenna ANT0 and the third antenna ANT2 through the first switching unit 310. The second transceiving module 240 may be selectively or switchably connected to one of the second antenna ANT1 and the fourth antenna ANT3 through the second switching unit 320, and the second receiving module 250 may be selectively or switchably connected to the other of the second antenna ANT1 and the fourth antenna ANT3 through the second switching unit 320.

In some embodiments, each of the first transceiving module 220 and the second transceiving module 240 may include a MMPA component, a filter module, etc. The radio-frequency MMPA component may be understood as a Multimode Multiband Power Amplifier Module (MMPA). The radio-frequency MMPA component may support transmitting processing and receiving processing for the first radio-frequency signals in a plurality of different frequency bands and transmitting processing and receiving processing for the second radio-frequency signals in a plurality of different frequency bands. The filter module is connected to the radio-frequency MMPA component. The filter module may be configured to support filtering processing for the first radio-frequency signals in different frequency bands and the second radio-frequency signals in different frequency bands, so as to output the first radio-frequency signals in different frequency bands and the second radio-frequency signals in different frequency bands. In some embodiments, the filter module may include a plurality of filters, and the filters are configured to filter the first radio-frequency signals in a plurality of different frequency bands and the second radio-frequency signals in a plurality of different frequency bands output by the radio-frequency MMPA component. In some embodiments, each filter only allows the first radio-frequency signal in a preset frequency band and the second radio-frequency signal in a preset frequency band to pass through, so as to filter out stray waves of other frequency bands. The frequency bands of the first radio-frequency signals output by the filters are different from each other, and the frequency bands of the second radio-frequency signals output by the filters are different from each other.

In some embodiments, each of the first transceiving module 220 and the second transceiving module 240 may be a radio-frequency PA Mid component. The radio-frequency PA Mid component may be understood as a Power Amplifier Module including Duplexers (PA Mid) with low noise amplifier arranged therein, and may be configured to support amplification processing and filtering processing for the first radio-frequency signals in a plurality of different frequency bands and amplification processing and filtering processing for the second radio-frequency signals in a plurality of different frequency bands. It should be noted that, in some embodiments of the present disclosure, specific configuration forms of the first transceiving module 220 and the second transceiving module 240 are not further limited.

In some embodiments, each of the first receiving module 230 and the second receiving module 250 may be a LFEM (Low noise amplifier front end module) component. The LFEM component may include a low noise amplifier, a plurality of filters, etc., and may be configured to support receiving processing for the first radio-frequency signals (such as 4G LTE signals in a plurality of different frequency bands) and receiving processing for the second radio-frequency signals (such as 5G NR signals in a plurality of different frequency bands). As shown in FIG. 5, in some embodiments, the radio-frequency transceiver 10 includes a first transmitting unit 110, a second transmitting unit 120, and a control unit 130. The first transmitting unit 110 is connected to the first output port TX OUTO, and is configured or enabled to transmit and process the first radio-frequency signal and the second radio-frequency signal. The second transmitting unit 120 is connected to the second output port TX OUT1, and is configured or enabled to transmit and process the first radio-frequency signal and the second radio-frequency signal. In some embodiments, each of the first transmitting unit 110 and the second transmitting unit 120 includes a plurality of power amplifiers configured to perform power amplification on the first radio-frequency signal and the second radio-frequency signal.

The control unit 130 is connected to the first input port RFIN0, the second input port RFIN1, the first transmitting unit 110, and the second transmitting unit 120, respectively, is configured to determine a target transmitting unit based on the radio-frequency signals received by the first input port RFIN0 and the second input port RFIN1, and configure or enable the target transmitting unit to work, so as to conduct the target transmitting channel. The target transmitting unit is one of the first transmitting unit 110 and the second transmitting unit 120. In some embodiments, the control unit 130 may determine the target transmitting unit based on the first signal quality of the radio-frequency signal received by the first sub-receiving channel and the first input port RFIN0 and the second signal quality of the radio-frequency signal received by the second sub-receiving channel and the second input port RFIN1.

The control unit 130 may compare the efficiency of the first antenna ANT0 with the efficiency of the second antenna ANT1 based on a first difference value between the second signal quality and the first signal quality. For example, if the first difference value is greater than a preset threshold, it is determined that the efficiency of the second antenna ANT1 is greater than the efficiency of the first antenna ANT0. At this time, the second antenna ANT1 may be used as the target transmitting antenna. Therefore, the second transmitting unit 120 may be used as the target transmitting unit, may control or enable the power amplifier in the second transmitting unit 120 to work, and may control the power amplifier in the first transmitting unit 110 to stop working (i.e., disenable the power amplifier in the first transmitting unit 110 from working), so as to realize a configuration of the target transmitting unit and conduct the target transmitting channel. If the first difference value is less than the preset threshold, it is determined that the efficiency of the first antenna ANT0 is greater than the efficiency of the second antenna ANT1. At this time, the first antenna ANT0 may be used as the target transmitting antenna. Therefore, the first transmitting unit 110 may be used as the target transmitting unit, may control or enable the power amplifiers in the first transmitting unit 110 and the first transceiving module 220 to work, and may control the power amplifiers in the second transmitting unit 120 and the second transceiving module 240 to stop working (i.e., disenable the power amplifiers in the second transmitting unit 120 and the second transceiving module 240 from working), so as to realize a configuration of the target transmitting unit and conduct the target transmitting channel.

In some embodiments of the present disclosure, both the first transmitting unit 110 and the second transmitting unit 120 in the radio-frequency transceiver 10 may support the transmitting processing for the first radio-frequency signal and the transmitting processing for the second radio-frequency signal. Whether the radio-frequency system is in the SA working mode or the LTE working mode, if the efficiency of the first antenna ANT0 is less than the efficiency of the second antenna ANT1, the target transmitting unit in the radio-frequency transceiver 10 may be reconfigured. For example, the target radio-frequency transmitting unit may be changed from the original first transmitting unit 110 to the second transmitting unit 120, or the original second transmitting unit 120 may be maintained as the target transmitting unit, to conduct the target transmitting channel thereof.

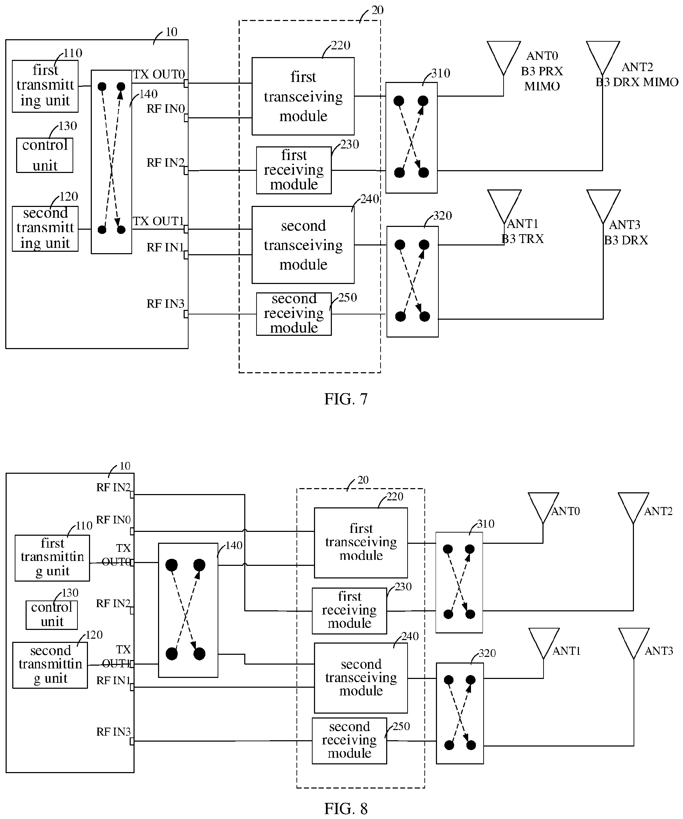

As shown in FIGS. 6 and 7, in some embodiments, the radio-frequency transceiver 10 includes a first transmitting unit 110, a second transmitting unit 120, a control unit 130, and a switching unit 140. Different from the previous embodiments, in these embodiments, the first transmitting unit 110 is connected to the first output port TX OUTO through the switching unit 140, and is only configured or enabled to transmit and process the first radio-frequency signal. The second transmitting unit 120 is connected to the second output port TX OUT1 through the switching unit 140, and is only configured or enabled to transmit and process the second radio-frequency signal. In some embodiments, the first transmitting unit 110 may include a power amplifier to support power amplification of the first radio-frequency signal, and the second transmitting unit 120 may include another power amplifier to support power amplification of the second radio-frequency signal. That is, the first transmitting unit 110 only supports power-amplification processing for the first radio-frequency signal, and the second transmitting unit 120 only supports power amplification processing for the second radio-frequency signal. For example, if the radio-frequency system is in the LTE working mode, the first transmitting unit 110 is in a working state. If the radio-frequency system is in the SA working mode, the second transmitting unit 120 is in a working state. In these embodiments, the control unit 130 is configured to determine the target antenna based on the radio-frequency signals received by the first input port RFIN0 and the second input port RFIN1, generate a switching signal, and output the switching signal to the switching unit 140 connected thereto. The switching unit 140 is also connected to the first output port TX OUTO and the second output port TX OUT1. The switching unit 140 may conduct a channel between a target output port and the target transmitting channel based on the switching signal output by the control unit 130. Herein, the target output port is one of the first output port TX OUTO and the second output port TX OUT1. It may be understood that, the target input port is also associated with the working mode of the current radio-frequency system. For example, if the radio-frequency system is in the LTE working mode, the first transmitting unit 110 is in the working state, and the corresponding target output port is the first output port TX OUT0. Correspondingly, if the radio-frequency system is in the SA working mode, the second transmitting unit 120 is in the working state, and the corresponding target output port is the second output port TX OUT1.

In some embodiments, the switching unit 140 may be a DPDT switch. One of two first ends of the DPDT switch is connected to the first transmitting unit 110, and the other of the two first ends of the DPDT switch is connected to the second transmitting unit 120. One of two second ends of the DPDT switch is connected to the first output port TX OUTO, and the other of the two second ends of the DPDT switch is connected to the second output port TX OUT1.

In some embodiments, the switching unit 140 may include two Single-Pole-Double-Throw (SPDT) switches. A single terminal of a first SPDT switch is connected to the first transmitting unit 110, one of two selecting terminals of the first SPDT switch is connected to the first output port TX OUTO, and the other of the two selecting terminals of the first SPDT switch is connected to the second output port TX OUT1. A single terminal of a second SPDT switch is connected to the second transmitting unit 110, one of two selecting terminals of the second SPDT switch is connected to the first output port TX OUTO, and the other of the two selecting terminals of the second SPDT switch is connected to the second output port TX OUT1. In some embodiments of the present disclosure, specific configuration forms of the switching unit 140 is not further limited.

For the convenience of description, in some embodiments of the present disclosure, as an example, the radio-frequency system works in the LTE working mode, and the first radio-frequency signal is the B3 signal.

As shown in FIG. 6, when the radio-frequency system works in a default state or an initial state of the LTE working mode, the first transmitting channel is used as the target transmitting channel. The first antenna ANT0 is a primary antenna, and is configured as a transmitting antenna and a primary receiving antenna for the B3 signal. The second antenna ANT1 is used for the primary MIMO reception of the B3 signal. The third antenna ANT2 is a diversity antenna, and is configured as a diversity receiving antenna for the B3 signal. The fourth antenna ANT3 is used for the diversity MIMO reception of the B3 signal.

The radio-frequency transceiver 10 may determine the target antenna based on the first signal quality of the B3 signal received by the first sub-receiving channel and the first input port RFIN0 and the second signal quality of the B3 signal received by the second sub-receiving channel RX1 and the second input port RFIN1. In some embodiments, the control unit 130 may compare the efficiency of the first antenna ANT0 with the efficiency of the second antenna ANT1 based on the first difference value between the second signal quality and the first signal quality. For example, if the first difference value is greater than the preset threshold, it is determined that the efficiency of the second antenna ANT1 is greater than the efficiency of the first antenna ANT0, then the second antenna ANT1 may be used as the target antenna. As shown in FIG. 7, the control unit 130 may control the switching unit 140 to conduct the second transmitting channel between the first transmitting unit 110 and the second output port TX OUT1, so as to configure the second transmitting channel as the target transmitting channel, configure the second sub-receiving channel as the target receiving channel, and configure the second antenna ANT1 as the primary antenna for the transmission and primary reception of the B3 signal. At the same time, the first sub-receiving channel connected to the first antenna ANT0 may be configured as a primary MIMO receiving channel of the B3 signal, in this way, the first antenna ANT0 is used for the primary MIMO reception of the B3 signal.

As shown in FIG. 8, in some embodiments, different from the radio-frequency system shown in FIGS. 6 and 7, the switching unit 140 may be arranged between the radio-frequency transceiver 10 and the transceiving circuit 20. That is, the switching unit 140 may also be may arranged out of the radio-frequency transceiver 10.

In the radio-frequency system shown in FIGS. 6-8, based on the current working mode of the radio-frequency system (such as the SA working mode or the LTE working mode), the switching unit 140 may be controlled to conduct a channel between the target transmitting unit and the target transmitting channel. In this way, the radio-frequency system may use the target antenna with high efficiency to support the transmission of the radio-frequency signal.

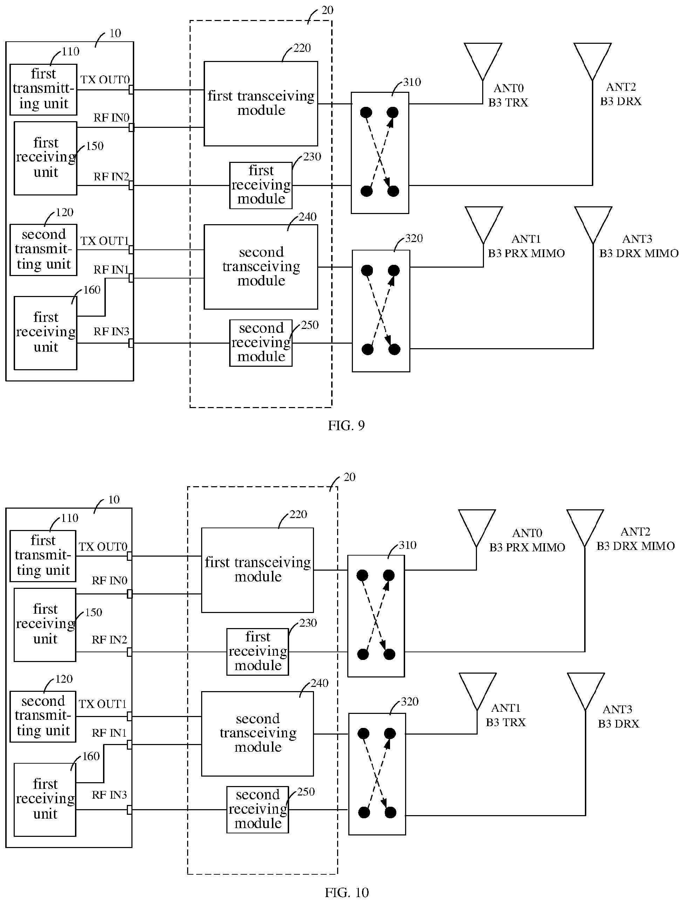

As shown in FIGS. 9 and 10, in some embodiments, the radio-frequency transceiver 10 is also configured with a third input port RFIN2 and a fourth input port RFIN3. The third input port RFIN2 is connected to the first receiving channel, and the fourth input port RFIN3 is connected to the second receiving channel. The radio-frequency transceiver 10 also includes a first receiving unit 150 and a second receiving unit 160, and each of the first receiving unit 150 and the second receiving unit 160 may support the receiving processing for the first radio-frequency signal and the receiving processing for the second radio-frequency signal. The first receiving unit 150 is connected to the first input port RFIN0 and the third input port RFIN2, respectively, and the second receiving unit 160 is connected to the second input port RFIN1 and the fourth input port RFIN3, respectively. In some embodiments, when the radio-frequency system is in one of the SA working mode and the LTE working mode, the radio-frequency transceiver 10 is configured to configure the target receiving channel based on at least one of the target transmitting channel, the radio-frequency signal received by the first sub-receiving channel, and the radio-frequency signal received by the second sub-receiving channel. Herein, the target receiving channel and the target transmitting channel are connected to the same antenna or different antennas.

In some embodiments of the present disclosure, as an example, the target receiving channel and the target transmitting channel are connected to the same antenna. As shown in FIG. 9, if the radio-frequency system is working in a default state or an initial state of the LTE working mode, the first transmitting channel is used as the target transmitting channel, the first transmitting channel is used as the target receiving channel, the first antenna ANT0 is used as the primary antenna for the transmission and primary reception of the B3 signal, the second antenna ANT1 is used for the primary MIMO reception of the B3 signal, the third antenna ANT2 is used as the diversity antenna for the diversity reception of the B3 signal, and the fourth antenna ANT3 is used for the diversity MIMO reception of the B3 signal. As shown in FIG. 10, if the target transmitting channel of the radio-frequency transceiver 10 is switched from the first transmitting channel to the second transmitting channel, that is, the target antenna is switched from the first antenna ANT0 to the second antenna ANT1, the radio-frequency transceiver 10 may correspondingly configure the second sub-receiving channel for the second antenna ANT1 as a primary receiving channel for the B3 signal, in this way, the second antenna ANT1 is used for the primary reception of the B3 signal. The radio-frequency transceiver 10 may correspondingly configure the first sub-receiving channel for the first antenna ANT0 as a primary MIMO receiving channel for the B3 signal, in this way, the first antenna ANT0 is used for the primary MIMO reception of the B3 signal. The radio-frequency transceiver 10 may correspondingly configure the first receiving channel connected to the third antenna ANT2 as a diversity receiving MIMO channel for the B3 signal, in this way, the third antenna ANT2 is used for the diversity MIMO reception of the B3 signal. The radio-frequency transceiver 10 may correspondingly configure the second receiving channel connected to the fourth antenna ANT3 as a diversity receiving channel for the B3 signal, in this way, the fourth antenna ANT3 is used for the diversity reception of the B3 signal.

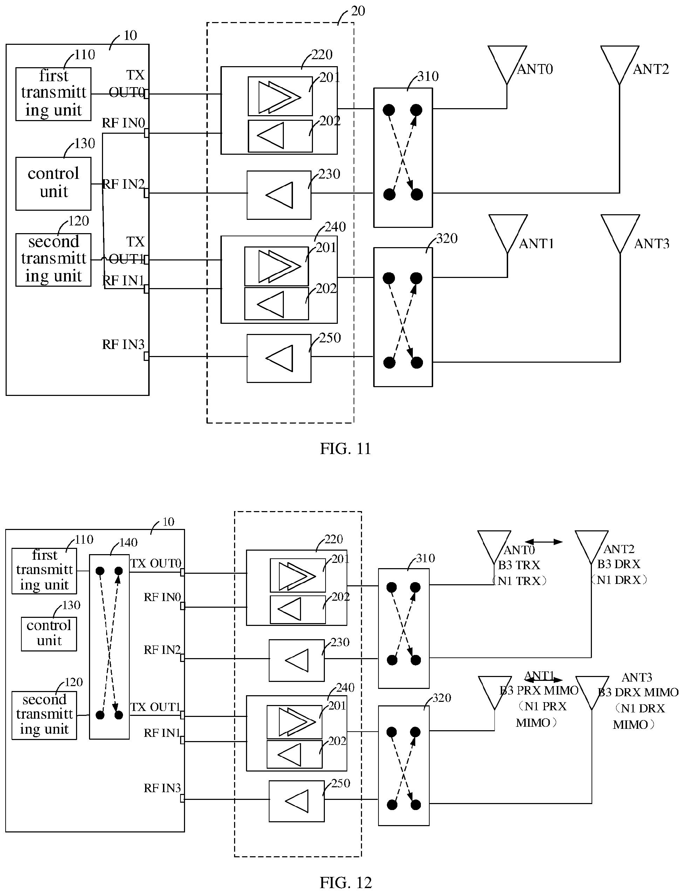

As shown in FIGS. 11 and 12, in some embodiments, each of the first transceiving module 220 and the second transceiving module 240 includes a transmitting unit 201 and a receiving unit 202. The transmitting unit 201 may include a power amplifier, a filter, and so on, and may be configured to support power amplification, filtering, and other processing for the first radio-frequency signals in a plurality of different frequency bands and the second radio-frequency signals in a plurality of different frequency bands. The receiving unit 202 may include a low noise amplifier, a filter, and so on, and may be configured to support filtering, low noise amplification, and other processing for the first radio-frequency signals in a plurality of different frequency bands and the second radio-frequency signals in a plurality of different frequency bands. In some embodiments, the transmitting unit 201 of the first transceiving module 220 may form the first transmitting channel, and the receiving unit 202 of the first transceiving module 220 may form the first sub-receiving channel. The transmitting unit 201 of the second transceiving module 240 may form the second transmitting channel, and the receiving unit 202 of the second transceiving module 240 may form the second sub-receiving channel.

For the convenience of description, some embodiments of the present disclosure describe a working principle of the radio-frequency transceiving system supporting LTE (MH band) + NR (MH band) ENDC based on the radio-frequency system shown in FIG. 12, and by using B3+N1 as an example. Herein, LTE B3 serves as an anchor point of 5G, a signaling connectivity is established firstly. The working principle of B3 is as follows.

A transmitting channel path for B3 is as follows.

The first transmitting unit 110 → the switching unit 140 → the first output port TX OUT0 → the transmitting unit 201 of the first transceiving module 220 → the first switching unit 310 → the first antenna ANT0.

A primary receiving channel path for B3 is as follows.

The first antenna ANT0 → the first switch 310 → the receiving unit 202 of the first transceiving module 220 → the first input port RFIN0.

A diversity receiving channel path for B3 is as follows.

The third antenna ANT2 → the first switch 310 → the first receiving module 230 → the third input port RFIN2.

A transmitting channel path for N1 is as follows.

The second transmitting unit 120 → the switching unit 140 → the second output port TX OUT1 → the transmitting unit 201 of the second transceiving module 240 → the second switching unit 320 → the second antenna ANT 1.

A primary receiving channel path for N1 is as follows.

The second antenna ANT1 → the second switching unit 320 → the receiving unit 202 of the second transceiving module 240 → the second input port RFIN1.

A diversity receiving channel path for N1 is as follows.

The fourth antenna ANT3 → the second switching unit 320 → the second receiving module 250 → the fourth input port RFIN3.

When the radio-frequency system is working in the NSA working mode, the first antenna ANT0 may also be used for the primary MIMO reception of N1, and the third antenna ANT2 may also be used for the diversity MIMO reception of N1. Correspondingly, the second antenna ANT1 may also be used for the primary MIMO reception of B3, and the fourth antenna ANT3 may also be used for the diversity MIMO reception of B3.

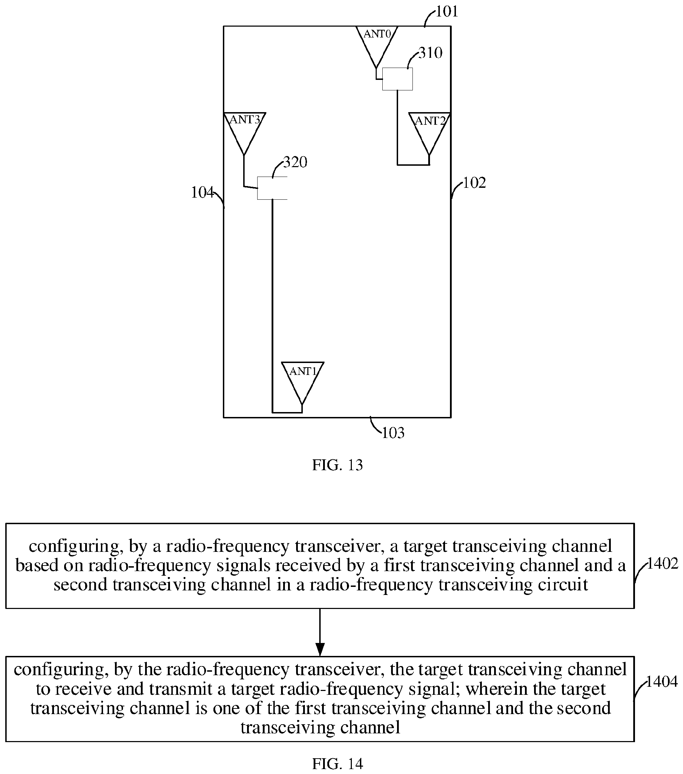

In some embodiments of the present disclosure, an insertion loss of the switching component may be reduced by arranging two DPDT switches independent from each other. For example, the insertion loss of the switching component may be reduced by about 0.5 dB. Therefore, an insertion loss on the receiving channel may be reduced to improve the sensitivity of the radio-frequency system. In addition, the cost of the radio-frequency system may be reduced. Hardware decoupling of two transmitting channels may be realized at the radio-frequency front end, which is convenient for flexible layout, and each of the two transmitting channels may be arranged close to the corresponding antenna. As shown in FIG. 13, for example, the first switching unit 310 connected to the first transmitting channel may be arranged close to the first antenna ANT0 and the third antenna ANT2, and the second switching unit 320 connected to the second transmitting channel may be arranged close to the second antenna ANT1 and the fourth antenna ANT3. A radio-frequency front end path loss of each transmitting channel may be further reduced, and the communication performance of the radio-frequency system may be improved.

In some embodiments, when environment of the radio-frequency system changes, a signal strength of each antenna may change correspondingly. For example, when antennas at different positions are blocked, the signal strengths of the antennas at different positions may be affected. When the radio-frequency system is in the NSA working mode, the radio-frequency system may further periodically obtain a signal strength R_{ANT0} of the first radio-frequency signal obtained based on the first sub-receiving channel and a signal strength R_{ANT2} of the first radio-frequency signal obtained based on the receiving channel for the third antenna ANT2. Herein, the period may be a fixed time, for example, may be set to 1 minute. The period may also be an unfixed time, for example, different durations may be set based on a using state of the radio-frequency system.

In some embodiments, if a difference value between the signal strength R_{ANT2} and the signal strength R_{ANT0} is greater than 0, it may be determined that the signal strength of the first radio-frequency signal received by the third antenna ANT2 is greater than the signal strength of the first radio-frequency signal received by the first antenna ANT0. That is, the first switching unit 310 may selectively or switchably conduct a channel between the first transceiving module 220 and the third antenna ANT2 and conduct a channel between the first receiving module 230 and the first antenna ANT0. In this way, the third antenna ANT2 may be used for the transmission and primary reception of the first transmitting signal, the first antenna ANT0 may be used for the diversity reception of the first transmitting signal, and a stability of the transmission and primary reception of the first transmitting signal may be ensured.

In some embodiments, when the radio-frequency system is in the NSA working mode, the radio-frequency system may also periodically obtain a signal strength R_{ANT1} of the second radio-frequency signal obtained based on the second sub-receiving channel and a signal strength R_{ANT3} of the second radio-frequency signal obtained based on the receiving channel for the fourth antenna ANT3. In some embodiments, if a difference value between the signal strength R_{ANT1} and the signal strength R_{ANT3} is greater than 0, it may be determined that the signal strength of the second radio-frequency signal received by the fourth antenna ANT3 is greater than the signal strength of the second radio-frequency signal received by the second antenna ANT1. That is, the second switching unit 320 may selectively conduct a channel between the second transceiving module 240 and the fourth antenna ANT3 and conduct a channel between the second receiving module 250 and the second antenna ANT1. In this way, the fourth antenna ANT3 may be used for the transmission and primary reception of the second transmitting signal, the second antenna ANT1 may be used for the diversity reception of the second transmitting signal, and a stability of the transmission and primary reception of the second transmitting signal may be ensured.

As shown in FIG. 14, some embodiments of the present disclosure also provide an antenna switching method. The antenna switching method is performed by the radio-frequency system in any one of the aforesaid embodiments. In some embodiments, the antenna switching method includes blocks 1402-1404.

At block 1402, the radio-frequency transceiver configures a target transceiving channel based on radio-frequency signals received by a first transceiving channel and a second transceiving channel in a radio-frequency transceiving circuit.

At block 1404, the radio-frequency transceiver configures or enables the target transceiving channel to receive and transmit a target radio-frequency signal. Herein, the target transceiving channel is one of the first transceiving channel and the second transceiving channel.

The first transceiving channel and the second transceiving channel are independent from each other. The first transceiving channel is configured to be selectively connected to one of a first antenna and a third antenna. The second transceiving channel is configured to be selectively connected to one of a second antenna and a fourth antenna.

The radio-frequency transceiver 10 may be configured with a plurality of ports connected to the radio-frequency transceiving circuit 20. In some embodiments, the radio-frequency transceiving circuit 20 includes a first transceiving channel, a second transceiving channel, a first receiving channel, and a second receiving channel. The first antenna ANT0 and the third antenna ANT2 are connected to some of the ports of the radio-frequency transceiver 10 through the radio-frequency transceiving circuit 20, respectively. In some embodiments, the first transceiving channel is configured to be selectively or switchably connected to one of the first antenna ANT0 and the third antenna ANT2, and the first receiving channel is configured to be selectively or switchably connected to the other of the first antenna ANT0 and the third antenna ANT2.

The second antenna ANT1 and the fourth antenna ANT3 are connected to some of the ports of the radio-frequency transceiver 10 through the radio-frequency transceiving circuit 20, respectively. In some embodiments, the second transceiving channel is configured to be selectively or switchably connected to one of the second antenna ANT1 and the fourth antenna ANT3, and the second receiving channel is configured to be selectively or switchably connected to the other of the second antenna ANT1 and the fourth antenna ANT3. The first transceiving channel and the second transceiving channel are independent from each other. That is, the first transceiving channel and the second transceiving channel are independent from each other in hardware. No connection or coupling in hardware exists between the first transceiving channel and the second transceiving channel. In some embodiments, the first transceiving channel may only be connected to the first antenna ANT1 and the third antenna ANT2, and cannot be connected to the second antenna ANT1 and the fourth antenna ANT4. Correspondingly, the second transceiving channel may only be connected to the second antenna ANT1 and the fourth antenna ANT4, and cannot be connected to the first antenna ANT0 and the third antenna ANT2.

The radio-frequency transceiver 10 stores configuration information of the first transceiving channel, the second transceiving channel, the first receiving channel, and the second receiving channel. The configuration information may include identification information of an antenna, identification information of a port of the radio-frequency transceiver 10, control logic information of each switch on the first transceiving channel, the second transceiving channel, the first receiving channel, and the second receiving channel. The radio-frequency transceiver 10 may store in advance a default receiving channel, a default transmitting channel, etc., of the radio-frequency system in different working modes. In some embodiments of the present disclosure, the default receiving channel and the default transmitting channel may be understood as a preferred channel or an optimal channel for signal transfer of the radio-frequency system in an initial state. It may be understood that, the aforesaid configuration information may also be stored in a storage device independent from the radio-frequency transceiver 10 and may be read by the radio-frequency transceiver 10 when being needed. The aforesaid configuration information may also be stored in the radio-frequency transceiver 10. In some embodiments of the present disclosure, a storage position of the configuration information is not further limited.

The radio-frequency transceiver 10 is configured to configure a target transceiving channel based on radio-frequency signals received by the first transceiving channel and the second transceiving channel, and configure or enable the target transceiving channel to transmit and receive a target radio-frequency signal. Herein, the target transceiving channel is one of the first transceiving channel and the second transceiving channel. The radio-frequency signals may include a first radio-frequency signal with a first communication format and a second radio-frequency signal with a second communication format. In some embodiments, the first radio-frequency signal may include 4G LTE signals in a plurality of frequency bands, and the second radio-frequency signal may include 5G NR signals in a plurality of frequency bands. It should be noted that, when the radio-frequency system is in different working modes, the communication formats of the radio-frequency signals that may be transmitted and received by the first transceiving channel and the second transceiving channel are different from each other. For example, when the radio-frequency system is in the SA working mode, the radio-frequency signals may include 5G NR signals in a plurality of frequency bands, and the corresponding target radio-frequency signal is also a 5G NR signal. When the radio-frequency system is in the LTE working mode, the radio-frequency signals may include 4G LTE signals in a plurality of frequency bands, and the corresponding target radio-frequency signal is also a 4G LTE signal. When the radio-frequency system is in the NSA working mode, the radio-frequency signals may include 4G LTE signals in a plurality of frequency bands and 5G NR signals in a plurality of frequency bands.

When the radio-frequency system is in the SA working mode or the LTE working mode, the radio-frequency transceiver may configure the target transceiving channel based on a signal strength of the radio-frequency signal received by the first transceiving channel and a signal strength of the radio-frequency signal received by the second transceiving channel. For example, the transceiving channel with a great or high signal strength may be taken as the target transceiving channel, and the target transceiving channel is configured or enabled to receive and transmit the target radio-frequency signal.

In the antenna switching method provided by some embodiments of the present disclosure, the radio-frequency transceiver configures the target transceiving channel based on the radio-frequency signals received by the first transceiving channel and the second transceiving channel in the radio-frequency transceiving circuit, and configures or enables the target transceiving channel to receive and transmit the target radio-frequency signal. Herein, the target transceiving channel is one of the first transceiving channel and the second transceiving channel. Since the first transceiving channel and the second transceiving channel are independent from each other, so as to realize decoupling and facilitate a flexible layout. The first transceiving channel and the second transceiving channel may be arranged at positions close to the corresponding antennas, respectively, so as to reduce link losses on the first transceiving channel and the second transceiving channel, and the communication performance of the radio-frequency system may be improved.

In some embodiments, efficiency of the first antenna and efficiency of the second antenna are higher than efficiency of the third antenna and efficiency of the fourth antenna. The first transceiving channel includes a first transmitting channel and a first sub-receiving channel, and the second transceiving channel includes a second transmitting channel and a second sub-receiving channel. The radio-frequency transceiver is configured to configure the first transmitting channel and the first sub-receiving channel to be connected to the first antenna, and configure the second transmitting channel and the second sub-receiving channel to be connected to the second antenna.

In some embodiments, the radio-frequency transceiver may be configured to configure a target transmitting channel based on the radio-frequency signals received by the first sub-receiving channel and the second sub-receiving channel, and the target transmitting channel is one of the first transmitting channel and the second transmitting channel.

In some embodiments, the radio-frequency transceiver may be further configured to configure a target receiving channel based on at least one of the target transmitting channel, and the radio-frequency signal received by the first sub-receiving channel, and the radio-frequency signal received by the second sub-receiving channel. Herein, the target receiving channel and the target transmitting channel are connected to the same antenna or different antennas.

It should be understood that although the blocks in the flow chart of FIG. 14 are shown in the order indicated by arrows, the blocks are not necessarily executed in the order indicated by the arrows. Unless explicitly stated in the present disclosure, there is no strict sequence restriction on the execution of these blocks, and these blocks may be executed in other orders. Moreover, at least some of the blocks in FIG. 14 may include a plurality of sub-blocks or sub-stages. The plurality of sub-blocks or sub-stages may be not necessarily completed at the same time, and may also be executed at different times. The execution sequence of these sub-steps or sub-stages does not necessarily need to be carried out in sequence, and may be executed in turn or alternately with at least some other blocks and sub-blocks.

Some embodiments of the present disclosure also provide a communication device. The communication device includes the radio-frequency system of any one of the aforesaid embodiments. The radio-frequency system of any one of the aforesaid embodiments is arranged in the communication device. The first transceiving channel and the second transceiving channel are independent from each other. The radio-frequency transceiver may configure the target transceiving channel based on the radio-frequency signals received by the first transceiving channel and the second transceiving channel, in this way, the decoupling of the first transceiving channel and the second transceiving channel may be realized, thereby facilitating a flexible layout. The first transceiving channel and the second transceiving channel may be arranged at positions close to the corresponding antennas, respectively, so as to reduce link losses on the first transceiving channel and the second transceiving channel, and the communication performance of the radio-frequency system may be improved.

In addition, by arranging the radio-frequency system of any one of the aforesaid embodiments in the communication device, the communication device may not only work in the NSA working mode to realize of the dual connectivity of the first radio-frequency signal and the second radio-frequency signal, but also configure the uplink signals on the first antenna and the second antenna with better antenna efficiency. In this way, the reliability of the uplink signals may be ensured, and the communication device may work in the SA working mode or the LTE working mode. In addition, when the communication device works in the SA working mode or the LTE working mode, the target transmitting channel may be configured from the first transceiving channel and the second transceiving channel, so as to realize transmission and reception of the radio-frequency signals corresponding to different working modes (such as the 4G LTE signals or the 5G NR signals). The uplink signals may also be configured on the first antenna or the second antenna with better antenna efficiency. The reliability of the uplink signals may be ensured, and the communication performance of the radio-frequency system in the SA working mode or the LTE working mode may be improved.

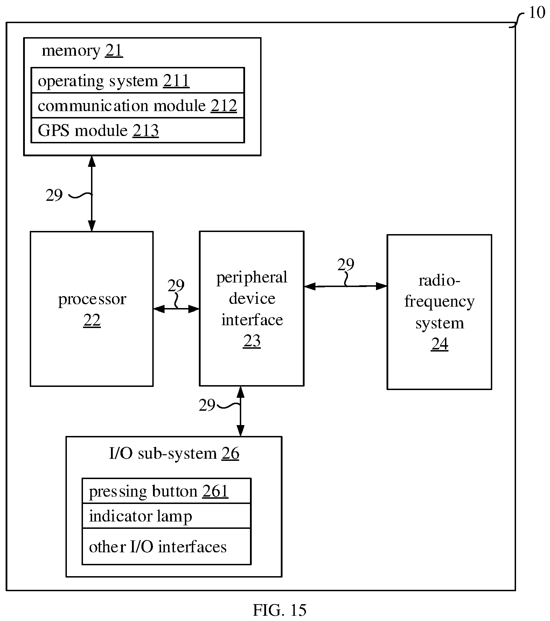

As shown in FIG. 15, as an example, the communication device is a mobile phone 10. As shown in FIG. 15, the mobile phone 10 may include a memory 21 (including one or more computer-readable storage mediums), a processor 22, a peripheral device interface 23, a radio-frequency system 24, and an input/output (I/O) sub-system 26. These components may communicate with each other via one or more communication buses or signal lines 29. Those skilled in the art may understand that the mobile phone 10 shown in FIG. 15 does not constitute a limitation on the mobile phone, and the mobile phone may include more or less components than that shown in FIG. 15, or a combination of some components, or a different component arrangement. The various components shown in FIG. 15 are implemented by hardware, software, or a combination of hardware and software, and include one or more signal processing and/or specific-application integrated circuits.

The memory 21 may include a high-speed random access memory (RAM), and may also include a non-volatile memory, such as one or more disk storage devices, one or more flash memory devices, or other non-volatile solid-state memory devices. For example, software components stored in the memory 21 include an operating system 211, a communication module (or instruction set) 212, a global positioning system (GPS) module (or instruction set) 213, and the like.

The processor 22 and other control circuits (such as a control circuit in the radio-frequency system 24) may be used to control the operation of the mobile phone 10. The processor 22 may be based on one or more microprocessors, microcontrollers, digital signal processors, baseband processors, power management units, audio encoder-decoder chips, application-specific integrated circuits, and the like.

The processor 22 may be configured to implement a control algorithm that controls usage of an antenna in the mobile phone 10. For example, the processor 22 may be configured to issue control commands for controlling switches in the radio-frequency system 24.

The I/O sub-system 26 is configured to couple input/output peripheral devices in the mobile phone 10 such as a keypad and other input control devices to the peripheral device interface 23. The I/O sub-system 26 may include a touch screen, a button, a joystick, a touch pad, a keypad, a keyboard, a tone generator, an acceleration sensor (a motion sensor), an ambient light sensor and other sensors, a light-emitting diode and other status indicators, a data port, and so on. For example, the user may input commands via the I/O sub-system 26 to control the operation of the mobile phone 10, and may obtain status information and other output from the mobile phone 10 by using output resources of the I/O sub-system 26. For example, the user may activate or deactivate the mobile phone by pressing button 261.

The radio-frequency system 24 may be the radio-frequency system of any of the aforesaid embodiments. The radio-frequency system 24 may also be configured to process radio-frequency signals in a plurality of different frequency bands. For example, the radio-frequency system 24 may include a satellite positioning radio-frequency circuit for receiving a satellite positioning signal in a 1575MHz frequency band, a WIFI and Bluetooth transceiving radio-frequency circuit for processing IEEE802.11 communication in 2.4GHz and 5GHz frequency bands, and a cellular telephone transceiving radio-frequency circuit for processing wireless communication in cellular telephone frequency bands (such as 850MHz, 900MHz, 1800MHz, 1900MHz, 2100MHz frequency bands, and Sub-6G frequency bands). Herein, the Sub-6G frequency bands may include a 2.496 GHz 6GHz frequency band and a 3.3GHz 6GHz frequency band.

Some embodiments of the present disclosure also provide a communication device. The communication device includes a radio-frequency transceiver. The radio-frequency transceiver stores a computer program. When the computer program is executed by the radio-frequency transceiver, the radio-frequency transceiver is enabled to execute the operations of the antenna switching method of any one of the aforesaid embodiments.

Some embodiments of the present disclosure also provide a communication device. The communication device includes a memory and a processor. The memory stores a computer program. When the computer program is executed by the processor, the processor is enabled to execute the operations of the antenna switching method of any of the aforesaid embodiments.

Some embodiments of the present disclosure also provide a computer-readable storage medium. The computer-readable storage medium may include one or more nonvolatile computer-readable storage medium containing computer executable instructions. When the computer executable instructions are executed by at least one processor, the at least one processor is enabled to execute the operations of the antenna switching method of any of the aforesaid embodiments.

Some embodiments of the present disclosure also provide a computer program product including an instruction. When the computer program product is running on a computer, the computer is enabled to execute the antenna switching method.

Any reference to memory, storage, database or other mediums used in the present disclosure may include a non-volatile and/or a volatile storage. The nonvolatile memory may include a read-only memory (ROM), a programmable ROM (PROM), an electrically programmable ROM (EPROM), an electrically erasable programmable ROM (EEPROM), or a flash memory. The volatile memory may include a random access memory (RAM), which serves as an external cache memory. As an illustration rather than a limitation, the RAM can be available in various forms, such as a static RAM (SRAM), a dynamic RAM (DRAM), a synchronous DRAM (SDRAM), a dual data rate SDRAM (DDR SDRAM), an enhanced SDRAM (ESDRAM), a synchronous link DRAM (SLSRAM), a rambus direct RAM (RDRAM), a direct rambus dynamic RAM (DRDRAM), and a rambus dynamic RAM (RDRAM).

The aforementioned embodiments only express several embodiments of the present disclosure, and the descriptions are specific and detailed. However, the aforementioned embodiments cannot be understood as limiting the scope of the present disclosure. It should be pointed out that, without departing from the concept of the present disclosure, those skilled in the art may also make some changes and improvements, which are within the protection scope of the present disclosure. Therefore, the protection scope of the present disclosure shall be subject to the appended claims.

## Claims

1. A radio-frequency system, comprising:
a radio-frequency transceiver;
a radio-frequency transceiving circuit, connected to the radio-frequency transceiver, wherein the radio-frequency transceiving circuit comprises a first transceiving channel, a second transceiving channel, a first receiving channel, and a second receiving channel; the first transceiving channel is configured to be selectively connected to one of a first antenna and a third antenna, and the first receiving channel is configured to be selectively connected to the other of the first antenna and the third antenna; the second transceiving channel is configured to be selectively connected to one of a second antenna and a fourth antenna, and the second receiving channel is configured to be selectively connected to the other of the second antenna and the fourth antenna; and the first transceiving channel and the second transceiving channel are independent from each other; and
wherein the radio-frequency transceiver is configured to configure a target transceiving channel based on radio-frequency signals received by the first transceiving channel and the second transceiving channel, and configure the target transceiving channel to receive and transmit a target radio-frequency signal, and wherein the target transceiving channel is one of the first transceiving channel and the second transceiving channel.

2. The radio-frequency system according to claim 1, further comprising a first switching unit and a second switching unit that are independent from each other;
wherein through the first switching unit, the first transceiving channel is selectively connected to one of the first antenna and the third antenna, and the first receiving channel is selectively connected to the other of the first antenna and the third antenna; and
wherein through the second switching unit, the second transceiving channel is selectively connected to one of the second antenna and the fourth antenna, and the second receiving channel is selectively connected to the other of the second antenna and the fourth antenna.

3. The radio-frequency system according to claim 2, wherein efficiency of the first antenna and efficiency of the second antenna are higher than efficiency of the third antenna and efficiency of the fourth antenna; the first transceiving channel comprises a first transmitting channel and a first sub-receiving channel, and the second transceiving channel comprises a second transmitting channel and a second sub-receiving channel; and the radio-frequency transceiver is further configured to configure the first transmitting channel and the first sub-receiving channel to be connected to the first antenna, and configure the second transmitting channel and the second sub-receiving channel to be connected to the second antenna.

4. The radio-frequency system according to claim 3, wherein the radio-frequency transceiver is configured to configure a target transmitting channel based on the radio-frequency signals received by the first sub-receiving channel and the second sub-receiving channel, and the target transmitting channel is one of the first transmitting channel and the second transmitting channel.

5. The radio-frequency system according to claim 4, wherein in response to the radio-frequency system being in a long term evolution (LTE) working mode, the radio-frequency transceiver configures the first transmitting channel as a default transmitting channel of the radio-frequency signals, and the radio-frequency transceiver is further configured to configure the target transmitting channel based on the radio-frequency signals received by the first sub-receiving channel and the second sub-receiving channel.

6. The radio-frequency system according to claim 5, wherein in response to a first difference value between signal quality of a radio-frequency signal, of the radio-frequency signals, received by the second sub-receiving channel and signal quality of another radio-frequency signal, of the radio-frequency signals, received by the first sub-receiving channel is greater than a first preset threshold, the radio-frequency transceiver configures the second transmitting channel as the target transmitting channel.

7. The radio-frequency system according to claim 4, wherein in response to the radio-frequency system being in a standalone (SA) working mode, the radio-frequency transceiver configures the second transmitting channel as a default transmitting channel of the radio-frequency signals, and the radio-frequency transceiver is further configured to configure the target transmitting channel based on the radio-frequency signals received by the first sub-receiving channel and the second sub-receiving channel.

8. The radio-frequency system according to claim 7, wherein in response to a second difference value between signal quality of a radio-frequency signal, of the radio-frequency signals, received by the first sub-receiving channel and signal quality of another radio-frequency signal, of the radio-frequency signals, received by the second sub-receiving channel is greater than a second preset threshold, the radio-frequency transceiver configures the first transmitting channel as the target transmitting channel.

9. The radio-frequency system according to any one of claims 4 to 8, wherein the radio-frequency transceiver is further configured to configure a target receiving channel based on at least one of the target transmitting channel, a radio-frequency signal, of the radio-frequency signals, received by the second sub-receiving channel, and another radio-frequency signal, of the radio-frequency signals, received by the first sub-receiving channel, and wherein the target receiving channel and the target transmitting channel are connected to the same antenna or different antennas.

10. The radio-frequency system according to claim 3, wherein the radio-frequency transceiver is configured with a first output port, a second output port, a first input port, and a second input port; the first output port is connected to the first transmitting channel, and the second output port is connected to the second transmitting channel; the first input port is connected to the first sub-receiving channel, and the second input port is connected to the second sub-receiving channel; and the radio-frequency signals comprise a first radio-frequency signal and a second radio-frequency signal with different communication formats; and
wherein the radio-frequency transceiver further comprises:
a first transmitting unit, connected to the first output port, and configured to transmit and process the radio-frequency signals;
a second transmitting unit, connected to the second output port, and configured to transmit and process the radio-frequency signals; and
a control unit, connected to the first input port, the second input port, the first transmitting unit, and the second transmitting unit, respectively, and configured to determine a target transmitting unit from the first transmitting unit and the second transmitting unit based on the radio-frequency signals received by the first input port and the second input port, configure the target transmitting unit to work, and configure a transmitting channel connected to the target transmitting unit as a target transmitting channel.

11. The radio-frequency system according to claim 3, wherein the radio-frequency transceiver is configured with a first output port, a second output port, a first input port, and a second input port; the first output port is connected to the first transmitting channel, and the second output port is connected to the second transmitting channel; the first input port is connected to the first sub-receiving channel, and the second input port is connected to the second sub-receiving channel; and the radio-frequency signals comprises a first radio-frequency signal and a second radio-frequency signal with different communication formats;
wherein the radio-frequency transceiver comprises:
a first transmitting unit, connected to the first output port, and configured to transmit and process the first radio-frequency signal;
a second transmitting unit, connected to the second output port, and configured to transmit and process the second radio-frequency signal; and
a control unit, connected to the first input port and the second input port, respectively, configured to determine a target transmitting channel from the first transmitting channel and the second transmitting channel based on the radio-frequency signals received by the first input port and the second input port, and generate a switching signal based on the target transmitting channel; and
wherein the radio-frequency system further comprises:
a switching unit, connected to the control unit, the first output port, and the second output port, respectively, and configured to conduct a connection between the target transmitting channel and the first output port or the second output port based on the switching signal and the target radio-frequency signal, wherein the target radio-frequency signal is one of the first radio-frequency signal and the second radio-frequency signal.

12. The radio-frequency system according to claim 11, wherein the switching unit is arranged between the radio-frequency transceiver and the radio-frequency transceiving circuit.

13. The radio-frequency system according to claim 11, wherein the switching unit is integrated in the radio-frequency transceiver; one of two first ends of the switching unit is connected to the first transmitting unit, and the other of the two first ends of the switching unit is connected to the second transmitting unit; and one of two second ends of the switching unit is connected to the first output port, and the other of the two second ends of the switching unit is connected to the second output port.

14. The radio-frequency system of claim 11, wherein the switching unit is a Double-Pole-Double-Throw (DPDT) switch.

15. The radio-frequency system according to claim 10 or 11, wherein the radio-frequency transceiver is further configured with a third input port and a fourth input port, the third input port is connected to the first receiving channel, and the fourth input port is connected to the second receiving channel;
wherein the radio-frequency transceiver further comprises:
a first receiving unit, connected to the first input port and the third input port, respectively, and configured to receive and process the radio-frequency signals;
a second receiving unit, connected to the second input port and the fourth input port, respectively, and configured to receive and process the radio-frequency signals; and
wherein the control unit is further configured to configure a target receiving channel based on at least one of the target transmitting channel, a radio-frequency signal, of the radio-frequency signals, received by the second sub-receiving channel, and another radio-frequency signal, of the radio-frequency signals, received by the first sub-receiving channel, and wherein the target receiving channel and the target transmitting channel are connected to the same antenna or different antennas.

16. The radio-frequency system according to claim 2, wherein the radio-frequency transceiver is configured with a first output port, a second output port, a first input port, a second input port, a third input port, and a fourth input port, and the radio-frequency transceiving circuit comprises a first transceiving module, a first receiving module, a second transceiving module, and a second receiving module;
wherein the first switching unit comprises two first ends and two second ends; one of the two first ends of the first switching unit is connected to the first input port and the first output port through the first transceiving module, respectively, and the other of the two first ends is connected to the third input port through the first receiving module; and one of the two second ends of the first switching unit is connected to the first antenna, and the other of the two second ends of the first switching unit is connected to the third antenna; and
wherein the second switching unit comprises two first ends and two second ends; one of the two first ends of the second switching unit is connected to the second input port and the second output port through the second transceiving module, respectively, and the other of the two first ends is connected to the fourth input port through the second receiving module; and one of the two second ends of the second switching unit is connected to the second antenna, and the other of the two second ends of the second switching unit is connected to the fourth antenna.

17. The radio-frequency system according to claim 2, wherein each of the first switching unit and the second switching unit is a DPDT switch; one of two first ends of the first switching unit is connected to the first transceiving channel, the other of the two first ends of the first switching unit is connected to the first receiving channel; one of two second ends of the first switching unit is connected to the first antenna, and the other of the two second ends of the first switching unit is connected to the third antenna; one of two first ends of the second switching unit is connected to the second transceiving channel, the other of the two first ends of the second switching unit is connected to the second receiving channel; one of two second ends of the second switching unit is connected to the second antenna, and the other of the two second ends of the second switching unit is connected to the fourth antenna.

18. An antenna switching method performed by a radio-frequency system, comprising:
configuring, by a radio-frequency transceiver, a target transceiving channel based on radio-frequency signals received by a first transceiving channel and a second transceiving channel in a radio-frequency transceiving circuit; and
configuring, by the radio-frequency transceiver, the target transceiving channel to receive and transmit a target radio-frequency signal; wherein the target transceiving channel is one of the first transceiving channel and the second transceiving channel; and wherein the first transceiving channel and the second transceiving channel are independent from each other; the first transceiving channel is configured to be selectively connected to one of a first antenna and a third antenna, and the second transceiving channel is configured to be selectively connected to one of a second antenna and a fourth antenna.

19. A communication device, comprising a radio-frequency system according to any one of claims 1 to 17.

20. A communication device, comprising:
a radio-frequency transceiver;
a radio-frequency transceiving circuit, connected to the radio-frequency transceiver, wherein the radio-frequency transceiving circuit comprises a first transceiving module, a second transceiving module, a first receiving module, and a second receiving module;
a first switching unit, configured to selectively connect the first transceiving module to one of a first antenna and a third antenna, and selectively connect the first receiving module to the other of the first antenna and the third antenna;
a second switching unit, configured to selectively connect the second transceiving module to one of a second antenna and a fourth antenna, and selectively connect the second receiving module to the other of the second antenna and the fourth antenna; and
wherein the radio-frequency transceiver is configured to configure one of the first transceiving module and the second transceiving module as a target transceiving module based on the radio-frequency signals received by the first transceiving module and the second transceiving module, and transmit and receive a target radio-frequency signal through the target transceiving module.

21. The communication device according to claim 20, wherein each of the first switching unit and the second switching unit is a (Double-Pole-Double-Throw) DPDT switch.

22. The communication device according to claim 20, wherein efficiency of the first antenna and efficiency of the second antenna are higher than efficiency of the third antenna and efficiency of the fourth antenna; and
wherein the radio-frequency transceiver is further configured to control the first switching unit to conduct a channel between the first transceiving module and the first antenna, and control the second switching unit to conduct a channel between the second transceiving module and the second antenna.
